# EUROPÄISCHE PATENTSCHRIFT

(11) **EP 2 636 306 B1**
(45) Veröffentlichungstag und Bekanntmachung des Hinweises auf die Patenterteilung: **25.06.2014**
(21) Anmeldenummer: 12001615.9
(22) Anmeldetag: 08.03.2012
(51) Int. Cl.: A01M 29/32

(54) **Abwehrvorrichtung zum Abwehren von Vögeln mit elastischer Dornlagerung**
Repelling device for birds with elasticaly held spikes
Dispositif pour chasser les volatiles avec pointes fixées des façon elastique

(43) Veröffentlichungstag der Anmeldung: 11.09.2013
(73) Patentinhaber: Jehle & König GbR, 85630 Neukeferloh (DE)
(72) Erfinder: Jehle, Bernd, 81927 München (DE); König, Thomas, 85630 Neukeferloh (DE)
(74) Vertreter: Rothkopf, Ferdinand

(56) Entgegenhaltungen:
- CN-U- 202 050 212
- DE-U1-202007 015 292
- JP-A- 2012 010 675
- US-A1- 2011 239 558

## Beschreibung

### Hintergrund der Erfindung

Die Erfindung betrifft eine Abwehrvorrichtung zum Abwehren von Vögeln von einem zu schützenden Gegenstand gemäß Anspruch 1. Eine Abwehrvorrichtung mit mindestens einem Stab, der mittels einer Halteeinrichtung an einem seiner Endbereiche gehalten ist, und einer Befestigungseinrichtung zum lösbaren Anbringen der Halteeinrichtung am zu schützenden Gegenstand, die ein erstes Befestigungselement und ein zweites Befestigungselement umfasst, wobei das erste Befestigungselement zum Koppeln der Halteeinrichtung an dem zweiten Befestigungselement und das zweite Befestigungselement zum Koppeln des ersten Befestigungselements an dem zu schützenden Gegenstand vorgesehen ist, ist, aus JP 2012 010675 A bekannt.

Gegenstände, die vor Vögeln geschützt werden sollen, sind beispielsweise Schiffe und Boote sowie Gebäude und Gebäudeteile, wie Mauervorsprünge und Balkone, an einem Hafen, in Ortschaften oder Städten. Bekannterweise sitzen oder nisten dort gerne Vögel, wie Möwen oder Tauben, die die Gegenstände sowohl durch Futterreste als auch insbesondere durch ihre Exkremente verschmutzen. Diese Verschmutzungen sind optisch nicht schön und können zudem Überträger von Krankheitserregern sein. Darüber hinaus wirken die Exkremente der Vögel ätzend, wodurch die Gegenstände an ihrer Oberfläche oftmals irreparabel beschädigt werden.

Entsprechend werden geeignete Vorrichtungen, die die Vögel daran hindern, sich an den genannten Gegenständen niederzulassen, benötigt. Es wurden beispielsweise Propeller entwickelt, elektrische und akustische Signaleinrichtungen sowie Leinen, die über ein zu schützendes Boot gespannt werden und darüber hinaus auch Vorrichtungen mit Stäben, insbesondere Drähten. Derartige bekannte Vorrichtungen sind mit vergleichsweise großem Aufwand auf oder an dem zu schützenden Gegenstand anzubringen.

### Zugrundeliegende Aufgabe

Der Erfindung liegt die Aufgabe zugrunde, eine Abwehrvorrichtung zum Abwehren von Vögeln zu schaffen, die besonders einfach und stabil am zu schützenden Gegenstand angebracht werden kann.

### Erfindungsgemäße Lösung

Diese Aufgabe ist erfindungsgemäß mit einer Abwehrvorrichtung zum Abwehren von Vögeln von einem zu schützenden Gegenstand mit mindestens einem Stab, der mittels einer Halteeinrichtung an einem seiner Endbereiche gehalten ist, und einer Befestigungseinrichtung zum lösbaren Anbringen der Halteeinrichtung am zu schützenden Gegenstand, die ein erstes Befestigungselement und ein zweites Befestigungselement umfasst, gelöst. Dabei ist das erste Befestigungselement zum Koppeln der Halteeinrichtung an dem zweiten Befestigungselement und das zweite Befestigungselement zum Koppeln des ersten Befestigungselements an dem zu schützenden Gegenstand vorgesehen. Ferner ist ein Haltemittel vorgesehen, mit dem das erste Befestigungselement an der Halteeinrichtung und gleichzeitig der mindestens eine Stab an der Halteeinrichtung gehalten ist.

Mittels des erfindungsgemäßen Haltemittels ist zum einen das erste Befestigungselement an der Halteeinrichtung gehalten. Darüber hinaus ist gleichzeitig der mindestens eine Stab an der Halteeinrichtung an einem seiner Endbereiche gehalten und damit in mindestens einem seiner Bewegungsgrade verhindert. Damit ist beispielsweise zumindest ein mögliches Herausrutschen des mindestens einen Stabes aus der Halteeinrichtung vermieden. Insgesamt erfüllt das Haltemittel gleichzeitig also zumindest zwei Funktionen, sodass keine zusätzlichen Befestigungsmittel zum Befestigen des mindestens einen Stabes gebraucht werden. Dies spart zum einen Material- und Herstellungskosten und darüber hinaus insbesondere weniger Bauraum verbraucht, sodass vorteilhaft die Grundlage für eine kompakte Halteeinrichtung geschaffen ist.

Die erfindungsgemäße Halteeinrichtung hält dabei den mindestens einen Stab an einem seiner Endbereiche, sodass der andere Endbereich des mindestens einen Stabes gegenüber der Halteeinrichtung positioniert ist und der einzelne Stab von der Halteeinrichtung absteht. Bevorzugt sind mehrere Stäbe von der Halteeinrichtung erfindungsgemäß gehalten, sodass mehrere Stäbe von der Halteeinrichtung abstehen. Der mindestens eine abstehende Stab, bevorzugt die mehreren abstehenden Stäbe, verhindern ein Niederlassen von Vögeln, da die Vögel auf dem abstehenden Endbereich des mindestens einen Stabes zu wenig Auflagefläche für deren Füße finden.

Die Halteeinrichtung insgesamt kann verschiedene Formen aufweisen. Eine bevorzugte Form ist zumindest annähernd eine zumindest teilweise gefüllte Kugelkappe, insbesondere Halbkugel, an der der mindestens eine Stab bevorzugt zumindest annähernd radial nach außen gerichtet, angeordnet ist. Besonders bevorzugt sind derart mehrere Stäbe, insbesondere entlang mindestens einer Kreislinie und bevorzugt über die gewölbte Oberfläche der Kugelkappe hinweg verteilt, angeordnet. Derart angeordnet, ist die erfindungsgemäße Abwehrvorrichtung zumindest annähernd in einer Form ähnlich eines Igels gebildet. Vorteilhaft ist damit ein Abwehren von Vögeln in alle Richtungen, vom zu schützenden Gegenstand aus betrachtet, mittels nur einer Abwehrvorrichtung gewährleistet.

Besonders bevorzugt ist der mindestens eine Stab federnd beziehungsweise elastisch gestaltet. Der einzelne federnde Stab ist dabei ein elastischer Kunststoffstab und/oder ein Metalldraht, besonders bevorzugt ein Edelstahldraht. Derart gestaltet, bewegt sich der einzelne federnde Stab, bevorzugt mehrere federnde Stäbe unter Einwirken von Bewegungen aus der Umgebung, zum Beispiel Wind und/oder Wellenschlag. Die federnden Stäbe werden damit in Schwingungen versetzt, die ein Anfliegen und Landen von Vögeln vorteilhaft zusätzlich besonders erschweren.

In einer vorteilhaften Weiterbildung der Erfindung ist das Haltemittel aus einem scheibenförmigem Grundkörper und einer Schraube gebildet. Dabei ist die Schraube, bevorzugt durch die Mitte des Grundkörpers hindurch durch das erste Befestigungselement in die Halteeinrichtung geschraubt.

Besonders bevorzugt weist der scheibenförmige Grundkörper eine in Höhenrichtung des Grundkörpers durch den Grundkörper hindurchgehende Aussparung beziehungsweise einen hindurchgehenden Kanal auf. Bevorzugt ist der Kanal dabei in der Mitte des scheibenförmigen Grundkörpers positioniert. Besonders bevorzugt befinden sich mindestens zwei Kanäle in dem scheibenförmigen Grundkörper, insbesondere zumindest annähernd radial gegenüberliegend.

Der genannte einzelne Kanal in dem scheibenförmigen Grundkörper dient zum Aufnehmen jeweils einer Schraube mit einem Schraubenschaft und einem Schraubenkopf, wobei der Durchmesser des Kanals kleiner ist als der Durchmesser des Schraubenkopfs. Die einzelne Schraube wird zum Aufnehmen derart durch den jeweiligen Kanal im scheibenförmigen Grundkörper geschoben, dass der Schraubenkopf auf der Fläche des scheibenförmigen Grundkörpers anliegt, die sich gegenüber dem ersten Befestigungselement befindet.

Bevorzugt ist im ersten Befestigungselement entsprechend mindestens ein Kanal vorgesehen, durch den der Schraubenschaft der jeweiligen Schraube in Richtung der Halteeinrichtung weiter hindurch geschoben werden kann.

In der Halteeinrichtung ist bevorzugt jeweils ein Gewinde für die jeweilige Schraube vorgesehen, in das die jeweilige Schraube geschraubt werden kann. Besonders bevorzugt ist die Halteeinrichtung aus Kunststoff gebildet und die einzelne Schraube kann vorteilhaft besonders einfach in den Kunststoff geschraubt werden. Damit ist eine besonders stabile Schraubverbindung hergestellt.

Insgesamt klemmt damit die Schraube mit dem scheibenförmigen Grundkörper das erste Befestigungselement gegen die Halteeinrichtung, mit der wiederum der mindestens eine Stab an seinem ersten Endbereich gehalten wird. Damit ist, wie bereits genannt, weiter kein zusätzliches Befestigungsmaterial für den mindestens einen Stab nötig.

Erfindungsgemäß bildet das Haltemittel besonders vorteilhaft ferner einen Teil der Befestigungseinrichtung. Dabei ist das erste Befestigungselement material- und platzsparend als scheibenförmiger Grundkörper des Haltemittels gestaltet, womit insgesamt eine besonders kompakte Halteeinrichtung geschaffen ist.

Gemäß der Erfindung weist der Endbereich des mindestens einen Stabes, der mittels der Halteeinrichtung gehalten ist, weiterhin vorzugsweise eine abgewinkelte oder kopfförmige Verformung auf und befindet sich zwischen dem ersten Befestigungselement sowie der Halteeinrichtung. Dabei hält das Haltemittel die Verformung des mindestens einen Stabes zwischen dem ersten Befestigungselement und der Halteeinrichtung.

Bevorzugt weist die Halteeinrichtung dazu mindestens einen Kanal auf, der durch die Halteeinrichtung hindurch führt und im Durchmesser geringfügig größer ist, als der Durchmesser des mindestens einen Stabes. Zugleich ist die Verformung an dem einen und damit ersten Endbereich des mindestens einen Stabes im Querschnitt größer, als der Durchmesser des genannten Kanals. Derart gestaltet, kann der mindestens eine Stab von unten durch den jeweiligen Kanal der Halteeinrichtung geschoben werden, bis der Stab mit dessen Verformung an der Halteeinrichtung anstößt und damit aufgehalten ist. Von unten bedeutet hier von der Innenseite der Halteeinrichtung, das heißt von der Seite der Halteeinrichtung, die in Richtung der Befestigungseinrichtung zeigt. Ist der mindestens eine Stab derart durch die Halteeinrichtung geschoben, so steht der Stab in seiner Längserstreckung von der der Innenseite gegenüberliegenden Außenseite der Halteeinrichtung ab.

Darüber hinaus kann der mindestens eine Stab mit seiner Verformung an der Innenseite der Halteeinrichtung mittels des Haltemittels zwischen dem ersten Befestigungselement und der Halteeinrichtung vorteilhaft gehalten werden. Insbesondere wird die Verformung mittels des erfindungsgemäß gestalteten Haltemittels zwischen dem ersten Befestigungselement und der Halteeinrichtung eingeklemmt. Damit ist eine besonders materialsparende und stabile Halterung des mindestens einen Stabes geschaffen. Dazu ist darüber hinaus besonders bevorzugt das Haltemittel gleichzeitig das erste Befestigungsmittel.

Ferner ist erfindungsgemäß zwischen dem Haltemittel und der Halteeinrichtung vorzugsweise eine Nut vorgesehen. Diese Nut verläuft bevorzugt entlang des Umfangs einer Aussparung in der Halteeinrichtung, sodass dort alle Verformungen des mindestens einen Stabes aufgenommen sind.

Alternativ oder zusätzlich weist das Haltemittel, insbesondere dessen scheibenförmiger Grundkörper eine Abschrägung auf, die Platz für die Verformung des mindestens einen Stabes schafft. Insgesamt ist mit dem Halten, insbesondere Klemmen, in der Nut oder an der Abschrägung vorteilhaft eine sehr kleine Anordnung trotz größerer Verformungen der Stäbe möglich.

Des Weiteren ist erfindungsgemäß zwischen dem Haltemittel und dem mindestens einen Stab ein elastisches Element vorgesehen. Das elastische Element ist insbesondere mittels des Haltemittels zwischen dem ersten Befestigungselement und der Verformung des mindestens einen Stabes, wie beschrieben, eingeklemmt. Damit ist eine federnde Vorspannung des elastischen Elements geschaffen, insbesondere zusammen mit der Verformung des mindestens einen Stabes. Vorteilhaft werden auf diese Weise gegebenenfalls auftretende Bewegungen des mindestens einen Stabes und/oder des ersten Befestigungselements und/oder des Haltemittels elastisch gedämpft. Insgesamt werden damit Klappergeräusche vermieden.

Darüber hinaus ist mit dem erfindungsgemäßen elastischen Element vorteilhaft zugleich eine abdichtende Wirkung, insbesondere gegenüber eindringendem Wasser, geschaffen.

Bevorzugt ist das elastische Element besonders einfach als elastischer Ring, insbesondere als sogenannter O-Ring gestaltet.

Besonders bevorzugt ist das elastische Element in der Nut an der Halteeinrichtung und/oder an der Abschrägung am Haltemittel positioniert. Derart positioniert, befindet sich das elastische Element vorteilhaft platzsparend genau am richtigen Ort.

Mit der bevorzugten Formgebung des elastischen Elements als Ring und dessen Positionierung in der Nut ist dieses an die bevorzugte Form der Halteeinrichtung als zumindest annähernde Halbkugelform angepasst. Damit ist ebenfalls ein Beitrag zu einer insgesamt besonders kompakten Bauweise der Halteeinrichtung geleistet.

In einer weiteren vorteilhaften Weiterbildung der erfindungsgemäßen Abwehrvorrichtung ist die die Befestigungseinrichtung mit einer Magneteinrichtung zum lösbaren Anbringen der Halteeinrichtung an einem zu schützenden Gegenstand vorgesehen. Mit der Magneteinrichtung kann die Halteeinrichtung mittels Magnetismus beziehungsweise Magnetkraft an dem zu schützenden Gegenstand wiederholt besonders einfach und schnell, ohne zusätzliches Werkzeug, angebracht und auch wieder gelöst werden. Die entstehende Magnetverbindung ist stabil gegenüber auftretenden Temperaturschwankungen und Einflüsse von Wasser und Salz.

Vorteilhaft umfasst die erfindungsgemäße Magneteinrichtung ein magnetisiertes Magnetelement und ein magnetisches Haftelement. Das magnetisierte Magnetelement ist dabei bevorzugt ein Dauer- beziehungsweise Permanentmagnet, das als bevorzugt ferromagnetischer Festkörper dauerhaft ein Magnetfeld erzeugt. Dieses Magnetfeld wirkt auf das Haftelement, das dazu magnetische Eigenschaften, insbesondere ferromagnetische Eigenschaften aufweist. Das heißt, dass beim Anlegen eines äußeren Magnetfeldes, vorliegend durch das Magnetelement, zumindest einzelne magnetische Bereiche im Haftelement derart ausgerichtet, insbesondere polarisiert, werden, dass sie antiparallel zum Magnetfeld des Magnetelements gerichtet sind. Die derart entstandenen entgegengesetzten Pole ziehen sich an und bewirken damit, dass das Haftelement vom Magnetelement angezogen wird. Damit ist vorteilhaft eine stabile, haltbare und wieder lösbare Magnetverbindung zwischen Magnetelement und Haftelement gebildet.

Bevorzugt ist das Magnetelement mittels der beschriebenen Magnetverbindung zum Koppeln an das Haftelement vorgesehen. Darüber hinaus ist das Magnetelement bevorzugt als erstes Befestigungselement an der Halteeinrichtung angebracht, womit die Halteeinrichtung an das Haftelement koppelbar und auch wieder davon lösbar ist. Das Haftelement seinerseits ist bevorzugt als zweites Befestigungselement am zu schützenden Gegenstand angebracht. Damit ist die Halteeinrichtung vorteilhaft mittels der Magneteinrichtung als Befestigungseinrichtung auch an den zu schützenden Gegenstand koppelbar und ebenfalls wieder davon lösbar. Dabei ist das Magnetelement vorteilhaft von der Halteeinrichtung, die vorzugsweise nicht magnetisiert ist, in ihrem erzeugten Magnetfeld abgeschirmt, außer auf der Seite, von der aus das Magnetfeld beziehungsweise Magnetkraft in Richtung Haftelement wirkt. Vorteilhaft ist damit eine gezielte magnetische Anziehung in Richtung Haftelement erreicht.

Bevorzugt ist das Haftelement Teil des zu schützenden Gegenstandes, sodass das Magnetelement und gekoppelt damit die gesamte Abwehrvorrichtung einfach nur auf und/oder an den zu schützenden Gegenstand auf- oder angebracht werden muss und auch jederzeit schnell wieder entfernt werden kann.

In einer alternativen erfindungsgemäßen Lösung ist das Magnetelement und das Haftelement vertauscht angebracht. Dies bedeutet, dass das Haftelement an der Halteeinrichtung angebracht ist und zum Koppeln der Halteeinrichtung an das Magnetelement dient. Das Magnetelement ist seinerseits zum Koppeln des Haftelements an dem zu schützendem Gegenstand vorgesehen. Darüber hinaus können sowohl das erste also auch das zweite Befestigungselement magnetisiert sein, sodass eine besonders stabile Magnetverbindung geschaffen ist. Derartige Ausführungsformen sind nur sinnvoll, wenn die anziehende Wirkung von weiteren magnetischen Festkörpern durch das zweite Befestigungselement sich nicht störend auswirkt.

Vorzugsweise ist das Haftelement plattenförmig gestaltet. Plattenförmig bedeutet, dass das Haftelement mit einer verhältnismäßig große Grundfläche und eine damit verglichen geringen Höhe gebildet ist. Mit der Grundfläche bietet das Haftelement eine verhältnismäßig große Auflagefläche für das Magnetelement auf der einen Seite, das dadurch besonders stabil an das Haftelement koppelbar ist. Darüber hinaus ist auf der anderen Seite der Grundfläche eine verhältnismäßig große Auflagefläche zum Koppeln mit dem zu schützenden Gegenstand vorgesehen.

Mit der plattenförmigen Gestalt des Haftelements ist dieses sehr dünn. Damit ist die Gesamtvorrichtung klein und braucht wenig Platz. Zugleich ist die Magneteinrichtung sehr nah am zu schützenden Gegenstand positioniert. Dies erhöht die Stabilität der Magnetverbindung. Mit einer großflächigen Platte als Haftelement und einer sich damit ergebenden großen Hebellänge wird auch eine mögliche Kippbewegung der Abwehrvorrichtung am zu schützenden Gegenstand reduziert.

Darüber hinaus ist das Magnetelement vorteilhaft scheibenförmig gestaltet. Bevorzugt bildet das derart gestaltete Magnetelement den scheibenförmigen Grundkörper des Haltemittels und damit insbesondere gleichzeitig das erste Befestigungselement. Besonders bevorzugt ist dazu das Magnetelement als Scheibe in einer Aussparung der Halteeinrichtung positioniert. Mit dem derart gestalteten und positionierten Magnetelement ist erfindungsgemäß eine sehr kompakte Halteeinrichtung und damit insgesamt eine Abwehrvorrichtung mit einem niedrig liegenden Schwerpunkt geschaffen. Der Schwerpunkt der Abwehrvorrichtung liegt damit sehr nahe am zu schützenden Gegenstand. Auf diese Weise werden Zugkräfte minimiert, die gegebenenfalls durch die Schwingungen der federnden Stäbe und damit verursachte Kippbewegungen der Abwehrvorrichtung auftreten. Vorteilhaft ist damit eine besonders stabile Verbindung der gesamten Abwehrvorrichtung an den zu schützenden Gegenstand geschaffen.

Gemäß der Erfindung ist ferner eine Kletteinrichtung zum lösbaren Anbringen der Halteeinrichtung am zu schützenden Gegenstand vorgesehen. Mittels der Kletteinrichtung ist eine Klettverbindung zwischen der Halteeinrichtung und dem zu schützenden Gegenstand ermöglicht. Die Klettverbindung wird beim Ausüben von Druck gebildet durch ein Verhaken von vielen kleinen, flexiblen, relativ steifen Haken und Schlaufen beziehungsweise Ösen nach dem sogenannten Haken-Ösen-Prinzip. Die derart gebildeten Verhakungen können mittels Ziehen schnell wieder voneinander gelöst werden. Die Kletteinrichtung hat zudem eine hohe Lebensdauer und kann vorteilhaft wiederholt zum lösbaren Bilden einer Klettverbindung verwendet werden. Auf diese Weise kann die Haltevorrichtung und damit auch die Abwehrvorrichtung je nach Bedarf am zu schützenden Gegenstand wiederholt sehr einfach angebracht und auch wieder gelöst werden. Darüber hinaus ist dafür vorteilhaft kein zusätzliches Werkzeug erforderlich.

Vorteilhaft umfasst die Kletteinrichtung zwei Klettelemente, von denen ein erstes Klettelement an der Halteeinrichtung ortsfest angeordnet und das zweite Klettelement zumindest leicht verformbar gestaltet ist, um am zu schützenden Gegenstand angebracht werden zu können.

Dabei ist das erste Klettelement bevorzugt aus Kunststoff und alternativ aus Edelstahl gebildet sowie ortsfest an der Halteeinrichtung bevorzugt mittels Ankleben, Annieten und/oder Anschrauben angeordnet, insbesondere befestigt. Bevorzugt bildet die Halteeinrichtung einen zumindest weitgehend starren beziehungsweise steifen Untergrund für das erste Klettelement, sodass dieses erste Klettelement mittels des ortsfesten Anordnens ebenfalls eine zumindest weitgehend steife Form aufweist. Dabei ist das erste Klettelement derart besonderes bevorzugt am zweiten Befestigungselement und damit insbesondere am bevorzugt plattenförmigen Haftelement angebracht.

Das zweite Klettelement ist dagegen besonders bevorzugt am zu schützenden Gegenstand ortsfest angebracht, bevorzugt mittels Ankleben, Annieten, Anschrauben und/oder insbesondere Annähen. Dazu ist das zweite Klettelement bevorzugt aus flexiblem Edelstahlblech, besonders bevorzugt aus Kunststoff, insbesondere gewebten Kunststofffasern gebildet und damit zumindest leicht verformbar gestaltet. Damit kann das zweite Klettelement besonders bevorzugt auch auf einen zumindest leicht verformbaren zu schützenden Gegenstand angebracht werden. Ein derartiger zu schützender Gegenstand ist beispielsweise eine Schutzhülle für ein Boot, insbesondere eine Persenning, ein Sonnenschirm oder eine Markise.

Mittels dem erfindungsgemäßen Gestalten und Anbringen der beiden Klettelemente, muss zum Anbringen der Halteeinrichtung und damit der Abwehrvorrichtung am zu schützenden Gegenstand nur noch das Haftelement mit dem ersten Klettelement auf das zweite Klettelement gedrückt werden. Dabei verhaken sich insbesondere die Haken und Ösen der beiden Klettelemente, wodurch besonders vorteilhaft eine stabile, reversible und wiederverwendbare Klettverbindung zwischen Abwehrvorrichtung und zu schützendem Gegenstand geschaffen ist.

Insgesamt ist mit der erfindungsgemäßen Lösung eine Abwehrvorrichtung zum Abwehren von Vögeln geschaffen, mit einer besonders kompakten Halteeinrichtung, die je nach Bedarf besonders schnell, einfach, wiederholt und ohne zusätzliches Werkzeug an einem zu schützenden Gegenstand stabil angebracht und auch wieder gelöst werden kann.

### Kurzbeschreibung der Zeichnungen

Nachfolgend werden Ausführungsbeispiele der erfindungsgemäßen Lösung anhand der beigefügten schematischen Zeichnungen näher erläutert. Es zeigt:

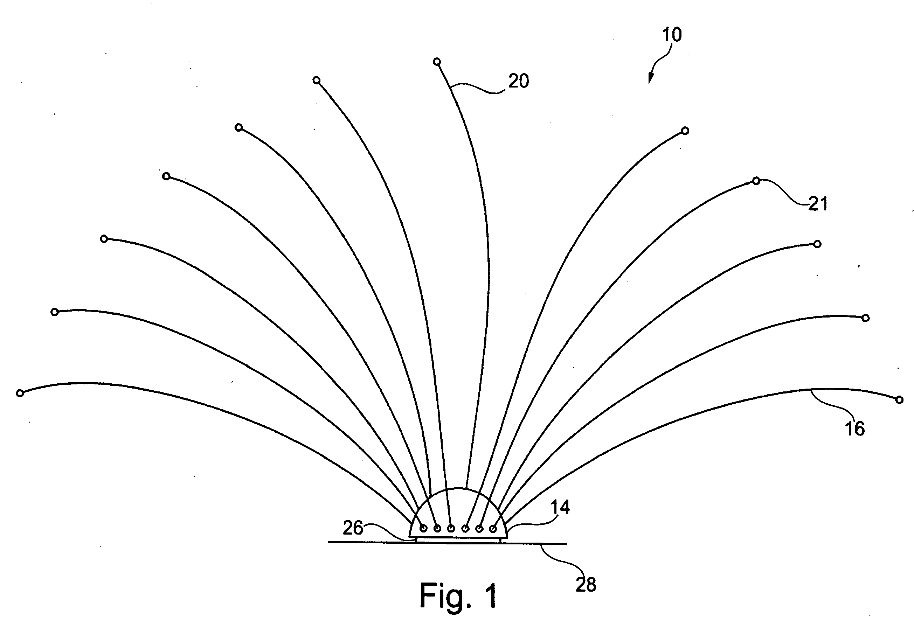

- Fig. 1: eine Seitenansicht einer erfindungsgemäßen Abwehrvorrichtung,
- Fig. 2: einen Längsschnitt einer ersten Variante der Abwehrvorrichtung gemäß Fig. 1,
- Fig. 3: das Detail III in Fig. 2 in vergrößerten Maßstab,
- Fig. 4: einen Längsschnitt einer zweiten Variante der Abwehrvorrichtung gemäß Fig. 1,
- Fig. 5: eine Draufsicht auf ein Haftelement einer Abwehrvorrichtung gemäß Fig. 4 und
- Fig. 6: eine Draufsicht auf ein zweites Klettelement einer Abwehrvorrichtung gemäß Fig. 4.

### Detaillierte Beschreibung der Ausführungsbeispiele

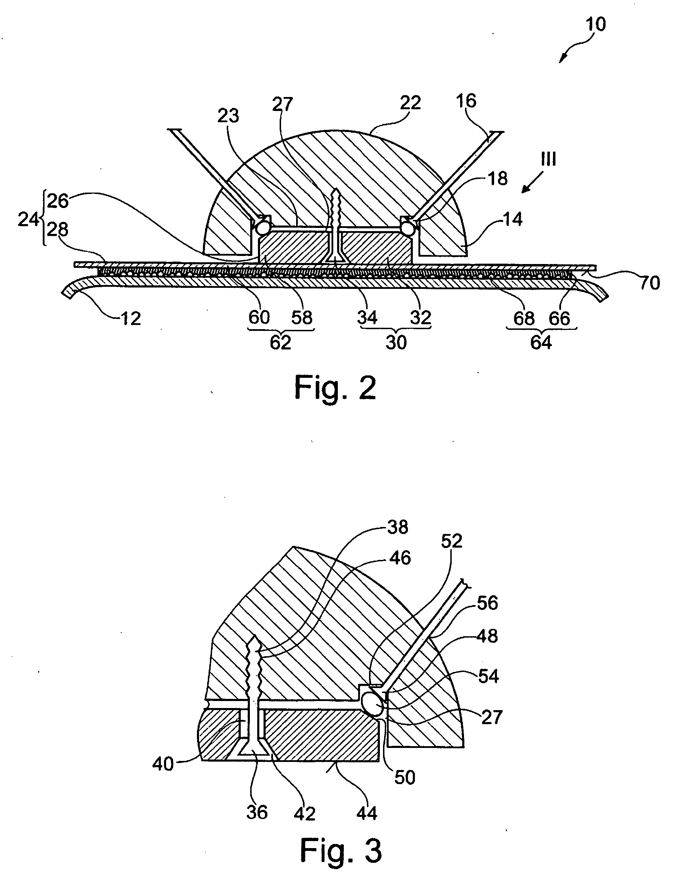

In den Fig. ist eine Abwehrvorrichtung 10 zum Abwehren von Vögeln von einem zu schützenden Gegenstand 12 dargestellt. Der zu schützende Gegenstand 12 ist z.B. ein Segelboot im Hafen oder etwa einer Boje, das mit einer Persenning abgedeckt ist, von der in Fig. 2 ein Teil abgebildet ist.

Die Abwehrvorrichtung 10 umfasst eine massive, annähernd halbkugelförmige Halteeinrichtung 14, ähnlich einer gefüllten Kappe. Diese hält bzw. stützt zwischen ca. 10 und 20 federnde, im Querschnitt kreisrunde Stäbe 16 mit je einem Durchmesser von ca. 1,3 mm bis 1,5 mm an jeweils deren einem beziehungsweise ersten Endbereich 18. Dabei sind die Endbereiche 18 an der Halbkugelform entlang einer Kreislinie voneinander gleichmäßig beabstandet an der Halteeinrichtung 14 angeordnet. Derart positioniert, stehen die Stäbe 16 von der Halteeinrichtung 14 ab, vorliegend mit einer Reichweite bzw. Länge pro Stab 16 von etwa 0,75 bis 1,25 Meter. Damit ist von jedem Stab 16 dessen, dem ersten Endbereich 18 gegenüberliegender, zweiter Endbereich 20 relativ weit entfernt von der Halteeinrichtung 14 positioniert.

Der einzelne Stab 16 ist aus Edelstahldraht ausgebildet, der sich elastisch beziehungsweise federnd durch Krafteinfluss aus der Umgebung, beispielsweise durch Wellen- oder Windbewegungen selbst in Bewegung versetzen lässt. Die Stäbe 16 schwingen dann in der genannten Reichweite über und um die Halteeinrichtung 14 hinweg hin und her. Mit dieser Bewegung werden Vögel am Landen und Niederlassen in diesem Raum gehindert. Ferner werden die Vögel durch die sich bewegenden Stäbe 16 und die sich damit ergebenden Lichtveränderungen irritiert und von dem zu schützenden Gegenstand auch in einem weiteren Radius vertrieben. Diese schwingenden Stäbe 16 wehren also durch ihre Bewegungen vorteilhaft anfliegende Vögel, vorliegend insbesondere Möwen, vom zu schützenden Gegenstand 12 in alle Richtungen mittels nur einer Abwehrvorrichtung 10 ab.

Der zweite Endbereich 20 ist jeweils stumpf ausgebildet, vorliegend mit einem Ring 21 oder vorzugsweise auch einer Kugel versehen, um einer möglichen Verletzungsgefahr entgegen zu wirken.

Die Halteeinrichtung 14 weist eine Oberseite 22 auf und eine Unterseite 23, die in Richtung des zu schützenden Gegenstandes 12 liegt. An der Unterseite 23 befindet sich eine Befestigungseinrichtung 24, mit der die Halteeinrichtung 14 am zu schützenden Gegenstand 12 lösbar angebracht ist. Dabei umfasst die Befestigungseinrichtung 24 ein erstes Befestigungselement 26, das vorliegend platzsparend in einer Aussparung 27 auf der Unterseite 23 der Halteeinrichtung 14 positioniert ist. Ferner umfasst die Befestigungseinrichtung 24 ein zweites Befestigungselement 28, das an dem zu schützenden Gegenstand 12 angebracht ist. Derart angeordnet, koppelt das erste Befestigungselement 26 die Halteeinrichtung 14 an das zweite Befestigungselement 28 und das zweite Befestigungselement 28 koppelt das erste Befestigungselement 26 an dem zu schützenden Gegenstand 12.

Zudem ist an der Halteeinrichtung 14 ein Haltemittel 30 vorgesehen, das gleichzeitig die Stäbe 16 und das erste Befestigungselement 26 hält. Das erste Befestigungsmittel 26 ist mit einem scheibenförmigen Grundkörper 32 gestaltet, der zugleich einen Teil des Haltemittels 30 bildet. Das Haltemittel 30 umfasst außer dem Grundkörper 32 eine Schraube 34 mit einem Schraubenkopf 36 in Form eines Senkkopfes und einem Schraubenschaft 38. Der Grundkörper 32 ist als Scheibe kreisförmig und weist in der Mitte des Kreises einen Kanal 40 auf, der im Durchmesser geringfügig größer ist als der Durchmesser des Schraubenschafts 38 und kleiner als der Durchmesser des Schraubenkopfs 36. Derart gestaltet, ist die Schraube 34 mit ihrem Schraubenschaft 38 durch den Kanal 40 geschoben und mit ihrem Schraubenkopf 36 an dem Grundkörper 32 in einer dafür vorteilhaft vorgesehenen Aussparung 42 des Grundkörpers 32 gehalten. Die Aussparung 42 dient zum Versenken des Schraubenkopfs 36, damit eine nahezu ebene Fläche 44 erhalten wird, die als Kontaktfläche für das zweite Befestigungselement 28 vorgesehen ist.

In der Halteeinrichtung 14 ist ein Gewinde 46 für die Schraube 34 vorgesehen, das beim Einschrauben der Schraube 34 entsteht.

Insgesamt hält, insbesondere klemmt damit die Schraube 34 den Grundkörper 32 gegen die Halteeinrichtung 14. Gleichzeitig werden mit dem Grundkörper 32 und damit mit dem ersten Befestigungselement 28 die Stäbe 16 an deren jeweiligem ersten Endbereich 18 gehalten.

Dazu ist an dem jeweiligen ersten Endbereich 18 eine abgewinkelte oder kopfförmige Verformung 48 des Stabes 16 ausgebildet, die sich zwischen dem ersten Befestigungselement 26 sowie der Halteeinrichtung 14 befindet. Dort wird die Verformung 48 mittels des ersten Befestigungselements 28 und der Schraube 34 gegen die Halteeinrichtung 14 gedrängt und damit eingeklemmt.

Insgesamt werden auf diese Weise die Stäbe 16 vorteilhaft material- und platzsparend ohne weitere Befestigungsmittel jeweils an deren einem Endbereich 18 klemmend an der Halteeinrichtung 14 gehalten. Mit dem Halten ist die Bewegung der Stäbe 16 in mindestens einem Bewegungsgrad verhindert, sodass ein Herausrutschen des einzelnen Stabes 16 aus der Halteeinrichtung 14 vermieden ist.

Der Grundkörper 32 des Haltemittels 30 weist im Bereich der Verformungen 48 eine Abschrägung 50 auf. Darüber hinaus umfasst die Halteeinrichtung 14 zusätzlich eine Nut 52, die kreisförmig entlang des Umfangs der Aussparung 27 verläuft. In dieser einen einzigen Nut 52 sind alle Verformungen 48 der Stäbe 16 aufgenommen.

Darüber hinaus ist zwischen dem Grundkörper 32 und den jeweiligen Verformungen 48 der Stäbe 16 ein elastisches Element 54 in der Abschrägung 50 und der Nut 52 eingeklemmt, das als elastischer Ring beziehungsweise O-Ring gestaltet ist. Mit der Klemmung ist das elastische Element 54 federnd vorgespannt drängt so die einzelnen Stäbe 16 nach außen. Insgesamt werden damit Klappergeräusche vermieden.

Zum Anbringen des einzelnen Stabes 16 an der Halteeinrichtung 14 ist in dieser je ein Kanal 56 ausgeformt, der durch die Halteeinrichtung 14 gebohrt ist und mit einem Durchmesser von etwa 2 mm geringfügig größer ist, als der Durchmesser des einzelnen Stabes 16. Zugleich ist die Verformung 48 an dem ersten Endbereich 18 des Stabes 16 im Querschnitt größer, als der Durchmesser des Kanals 56. Beim Herstellen der Abwehrvorrichtung 10 wird der einzelne Stab 16 von der Unterseite 23 durch den Kanal 56 der Halteeinrichtung 14 geschoben, bis der Stab 16 mit dessen Verformung 48 an der Halteeinrichtung 14 anstößt und damit zurückgehalten ist.

Der mindestens eine Kanal 56 ist dabei schräg ansteigend in der Halteeinrichtung 14 von innen nach außen beziehungsweise von der Unterseite 23 bis zur Oberseite 23 ausgerichtet. Der jeweilige Stab 16, der durch den zugehörigen Kanal 56 der Halteeinrichtung 14 geschoben ist, weist entsprechend schräg nach oben von der Halteeinrichtung 14 weg. Damit ergibt sich für die im Kreis an den Kanälen 56 angeordneten Stäbe 16 eine kegelige, nach außen sich weitende Form.

Das erste Befestigungselement 26 wirkt nicht nur als Grundkörper 32 des Haltemittels 30, sondern auch als ein scheibenförmiges Magnetelement 58. Dieses Magnetelement 58 ist magnetisiert und dadurch ein Dauermagnet beziehungsweise ein Permanentmagnet, vorliegend aus Neodym-Eisen-Bor.

Unter dem Magnetelement 58 ist ein Haftelement 60 angeordnet. Dieses dient zum Koppeln des Magnetelements 58 als erstes Befestigungselement 26 an das zweite Befestigungselement 28. Das Haftelement 60 ist aus magnetischem beziehungsweise magnetisierbarem Edelstahl gebildet und hat dadurch magnetischen Charakter.

Das Haftelement 60 und das Magnetelement 58 bilden eine Magneteinrichtung 62. Dabei ist das Haftelement 60 am zu schützenden Gegenstand 12 angebracht und das Magnetelement 58 an der Halteeinrichtung 14 befestigt. Auf diese Weise ist die Halteeinrichtung 14 über die Magneteinrichtung 62 mit dem zu schützenden Gegenstand 12 verbunden. Bei dieser Verbindung wirkt die Magneteinrichtung 62 als Teil der Befestigungseinrichtung 24.

Die derartige magnetische Verbindung kann schnell zusammengekoppelt werden und bei Bedarf auch sehr schnell wieder lösbar. Sie ist zudem beständig gegen normale äußere Krafteinflüsse, wie Wellenschlag oder Winddruck, und unempfindlich gegen Umwelteinflüsse, wie Temperaturänderungen und Luftfeuchtigkeit.

Das Haftelement 60 ist seinerseits wiederum nicht direkt am zu schützenden Gegenstand 12 angebracht, sondern an eine Kletteinrichtung 64 gekoppelt. Diese Kletteinrichtung 64 ist dann mit dem zu schützenden Gegenstand 12 verbunden. Dazu umfasst die Kletteinrichtung 64 ein erstes Klettelement 66, das am Haftelement 60 und ein zweites Klettelement 68, das am zu schützenden Gegenstand 12 angebracht ist. Dabei ist das erste Klettelement 66 an dem Haftelement 60 an dessen Unterseite 70 angeklebt, die dem zu schützenden Gegenstand 12 zugewandt ist.

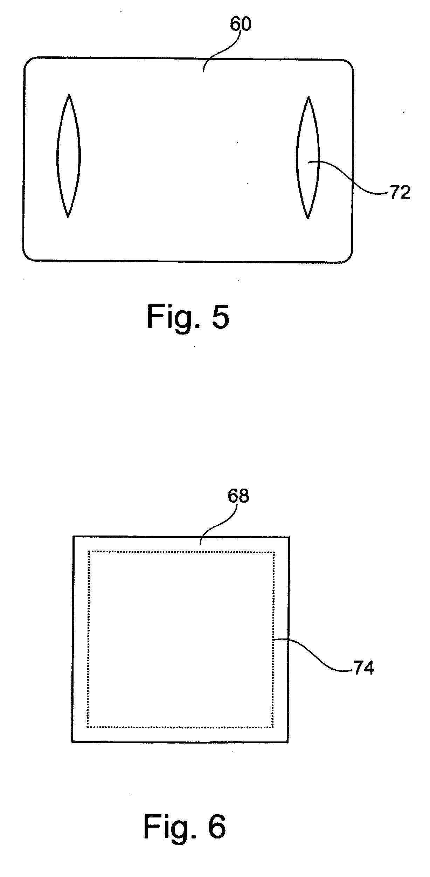

Das Haftelement 60 ist plattenförmig gestaltet, vorliegend als rostfreies Edelstahlmagnetblech mit einer Stärke von etwa 1,5 mm. Gemäß Fig. 5 ist das Haftelement 60 rechteckig mit abgerundeten Ecken und Kanten gestaltet, mit einer Länge von etwa 150 mm und einer Breite von etwa 260 mm bis 2600 mm.

Damit ist auf der einen Seite für das Magnetelement 58 eine große Auflagefläche geschaffen. Damit ist eine besonders stabile Magnetverbindung möglich. Bei einem nicht dargestellten Ausführungsbeispiel eines Haftelements 60 ist dieses als Kunststoffbrett gestaltet, in das ein ca. 100 mm mal 150 mm großes beidseitig pulverbeschichtetes Edelstahlmagnetblech eingesetzt ist. Das derart eingesetzte Edelstahlmagnetblech ist vorzugsweise mittels Schrauben an der Rückseite des Kunststoffbretts an diesem zurückgehalten, wobei die Schrauben dort bevorzugt versenkt und versiegelt sind.

Zugleich ist auf der anderen Seite eine große Auflagefläche zum Aufbringen eines dann besonders großen ersten Klettelements 66 geschaffen. So dass mit diesem eine besonders stabile Klettverbindung für das Haftelement 60 erzielt ist.

Am Haftelement 60 sind ein oder vorzugsweise zwei Öffnungen 72 ausgebildet, die als Griffe dienen. An den beiden Grifföffnungen 72 kann das Haftelement 60 genommen werden, um es mit seiner Unterseite 70 sowie dem daran angebrachten ersten Klettelement 66 auf das zweite Klettelement 68 zu drücken. Auch ein Lösen der Klettverbindung mittels Ziehen ist mit den Grifföffnungen 72 erleichtert.

Das zweite Klettelement 68 ist in den Ausführungsbeispielen gemäß Fig. 6 als textiles Kunstfasergewebe leicht verformbar mit einem Nahtbereich 74 gestaltet. Entlang dieses Nahtbereichs 74 ist das zweite Klettelement 68 an die Persenning, die als solche verformbar ist, ortsfest angenäht. Mit dem Nähen bleiben das Klettelement 68 und die Persenning weiterhin verformbar. So kann das zweite Klettelement 68 zusammen mit der Persenning weitgehend flächig an das erste Klettelement 66 angelegt werden, obwohl dieses an dem als Edelstahlblech gestalteten Haftelement 60 weitgehend starr positioniert ist.

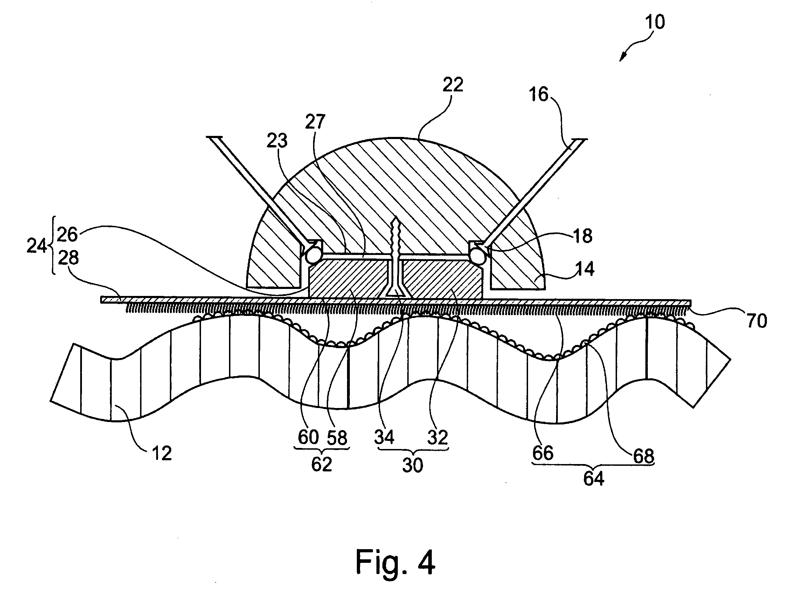

In der Variante, die in Fig. 4 dargestellt ist, weist der zu schützende Gegenstand 12, beispielsweise ein welliges Dach, eine steife, wellenförmige Oberfläche auf. Diese Oberfläche ist damit andere geformt, als die ebene Form des ersten Klettelements 66. Das verformbare zweite Klettelement 68 ist in dieser Variante auf der wellenförmigen Oberfläche des zu schützenden Gegenstands 12 vollflächig aufgeklebt. Damit liegt das zweite Klettelement 68 anders geformt vor, als das erste Klettelement 66. Beim Aneinanderdrücken der beiden Klettelemente 66 und 68 reicht deren Berührungsfläche dennoch zum Bilden einer stabilen Klettverbindung aus.

Vorliegend ist die Kletteinrichtung 64 gemäß dem sogenannten Haken-Ösen-Prinzip aus gewebten Kunststoffasern gebildet. Dabei ist das erste Klettelement 66 mit Haken gebildet und das zweite Klettelement 68 mit Ösen beziehungsweise Schlaufen als Flausch-Schlaufenelement. Alternativ sind die beiden Klettelemente bezüglich ihrer Ausstattung mit Haken oder Ösen vertauscht. Derart gebildet, hat die Kletteinrichtung 64 einen textilen Charakter und birgt damit keine Verletzungsgefahr beim Handhaben.

Beim Aneinanderdrücken der beiden Klettelemente 66 und 68 verhaken sich die Haken in den Ösen und eine stabile, lösbare sowie wiederherstellbare Klettverbindung ist hergestellt. Diese Klettverbindung ist beständig gegenüber auftretenden Umwelteinflüssen, wie Wind, Temperaturschwankungen, Wasser- und Salzgehalt der Luft.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Abwehrvorrichtung
- 12: zu schützender Gegenstand
- 14: Halteeinrichtung
- 16: Stab
- 18: erster Endbereich
- 20: zweiter Endbereich
- 21: Ring oder Kugel
- 22: Oberseite
- 23: Unterseite
- 24: Befestigungseinrichtung
- 26: erstes Befestigungselement
- 27: Aussparung
- 28: zweites Befestigungselement
- 30: Haltemittel
- 32: Grundkörper
- 34: Schraube
- 36: Schraubenkopf
- 38: Schraubenschaft
- 40: Kanal
- 42: Aussparung
- 44: Fläche
- 46: Gewinde
- 48: Verformung
- 50: Abschrägung
- 52: Nut
- 54: elastisches Element
- 56: Kanal
- 58: Magnetelement
- 60: Haftelement
- 62: Magneteinrichtung
- 64: Kletteinrichtung
- 66: erstes Klettelement
- 68: zweites Klettelement
- 70: Unterseite
- 72: Grifföffnung
- 74: Nahtbereich

## Patentansprüche

1. Abwehrvorrichtung (10) zum Abwehren von Vögeln von einem zu schützenden Gegenstand (12) mit mindestens einem Stab (16), der mittels einer Halteeinrichtung (14) an einem seiner Endbereiche (18) gehalten ist, und einer Befestigungseinrichtung (24) zum lösbaren Anbringen der Halteeinrichtung (14) am zu schützenden Gegenstand (12), die ein erstes Befestigungselement (26) und ein zweites Befestigungselement (28) umfasst, wobei das erste Befestigungselement (26) zum Koppeln der Halteeinrichtung (14) an dem zweiten Befestigungselement (28) und das zweite Befestigungselement (28) zum Koppeln des ersten Befestigungselements (26) an dem zu schützenden Gegenstand (12) vorgesehen ist, bei der ein Haltemittel (30) vorgesehen ist, mit dem das erste Befestigungselement (26) an der Halteeinrichtung (14) und gleichzeitig der mindestens eine Stab (16) an der Halteeinrichtung (14) gehalten ist,
**dadurch gekennzeichnet, dass** zwischen dem Haltemittel (30) und dem mindestens einen Stab (16) ein elastisches Element (54) vorgesehen ist.

2. Abwehrvorrichtung nach Anspruch 1,
**dadurch gekennzeichnet, dass** das Haltemittel (30) aus einem scheibenförmigem Grundkörper (32) und einer Schraube (34) gebildet ist.

3. Abwehrvorrichtung nach Anspruch 1 oder 2,
**dadurch gekennzeichnet, dass** das Haltemittel (30) einen Teil der Befestigungseinrichtung (24) bildet.

4. Abwehrvorrichtung nach einem der Ansprüche 1 bis 3,
bei der der Endbereich (18) des mindestens einen Stabes, der mittels der Halteeinrichtung (14) gehalten ist, eine Verformung (48) aufweist und sich zwischen dem ersten Befestigungselement (26) sowie der Halteeinrichtung (14) befindet, **dadurch gekennzeichnet, dass** das Haltemittel (30) die Verformung (48) des mindestens einen Stabes (16) zwischen dem ersten Befestigungselement (26) und der Halteeinrichtung (14) hält.

5. Abwehrvorrichtung nach einem der Ansprüche 1 bis 4,
**dadurch gekennzeichnet, dass** zwischen dem Haltemittel (30) und der Halteeinrichtung (14) eine Nut (52) vorgesehen ist.

6. Abwehrvorrichtung nach einem der Ansprüche 1 bis 5,
bei der die Befestigungseinrichtung (24) als eine Magneteinrichtung (62) zum lösbaren Anbringen der Halteeinrichtung (14) an einem zu schützenden Gegenstand (12) vorgesehen ist.

7. Abwehrvorrichtung nach Anspruch 6,
bei der die Magneteinrichtung (62) ein magnetisiertes Magnetelement (58) und ein magnetisches Haftelement (60) umfasst.

8. Abwehrvorrichtung nach einem der Ansprüche 1 bis 7,
**dadurch gekennzeichnet, dass** eine Kletteinrichtung (64) zum lösbaren Anbringen der Halteeinrichtung (14) am zu schützenden Gegenstand (12) vorgesehen ist.

9. Abwehrvorrichtung nach Anspruch 8,
bei der die Kletteinrichtung (64) zwei Klettelemente (66, 68) umfasst,
von denen ein erstes Klettelement (66) an der Halteeinrichtung (14) ortsfest angeordnet und das zweite Klettelement (68) zumindest leicht verformbar gestaltet ist, um am zu schützenden Gegenstand (12) angebracht werden zu können.

## Claims

1. Repelling device (10) for repelling birds from an object (12) which is to be protected, said device having at least one projection (16), which is held by means of a holding arrangement (14) at one of its end regions (18), and a fastening arrangement (24) for the releasable attachment of said holding arrangement (14) to the object (12) to be protected, which fastening arrangement comprises a first fastening element (26) and a second fastening element (28), wherein the first fastening element (26) is provided for the purpose of coupling the holding arrangement (14) to the second fastening element (28), and the second fastening element (28) is provided for the purpose of coupling the first fastening element (26) to the object (12) to be protected, in which device there is provided a holding means (30) with the aid of which the first fastening element (26) is held on the holding arrangement (14) and, at the same time, the at least one projection (16) is held on said holding arrangement (14),
**characterised in that** an elastic element (54) is provided between the holding means (30) and the at least one projection (16).

2. Repelling device according to Claim 1,
**characterised in that** the holding means (30) is formed from a disc-shaped base member (32) and a screw (34).

3. Repelling device according to Claim 1 or 2,
**characterised in that** the holding means (30) forms part of the fastening arrangement (24).

4. Repelling device according to one of Claims 1 to 3, in which the end region (18) of the at least one projection, which is held by means of the holding arrangement (14), has a shaped portion (48) and is located between the first fastening element (26) and the holding arrangement (14),
**characterised in that** the holding means (30) holds the shaped portion (48) of the at least one projection (16) between the first fastening element (26) and the holding arrangement (14).

5. Repelling device according to one of Claims 1 to 4,
**characterised in that** a groove (52) is provided between the holding means (30) and the holding arrangement (14).

6. Repelling device according to one of Claims 1 to 5, in which the fastening arrangement (24) is provided in the form of a magnetic arrangement (62) for attaching the holding arrangement (14) in a releasable manner to an object (12) to be protected.

7. Repelling device according to Claim 6, **characterised in that** the magnetic arrangement (62) comprises a magnetised magnetic element (58) and a magnetic adhesive element (60).

8. Repelling device according to one of Claims 1 to 7,
**characterised in that** a hook-and-loop arrangement (64) is provided for the releasable attachment of the holding arrangement (14) to the object (12) to be protected.

9. Repelling device according to Claim 8,
in which the hook-and-loop arrangement (64) comprises two hook-and-loop elements (66, 68), of which a first hook-and-loop element (66) is arranged in a stationary manner on the holding arrangement (14) and the second hook-and-loop element (68) is designed in an at least slightly deformable manner, so as to be capable of being attached to the object (12) to be protected.

## Revendications

1. Dispositif repoussoir (10) pour chasser les volatiles d'un objet à protéger (12) avec au moins une tige (16) maintenue au niveau d'une de ses zones d'extrémité (18) au moyen d'un dispositif de maintien (14) et avec un dispositif de fixation (24) permettant de placer de façon amovible le dispositif de maintien (14) au niveau de l'objet à protéger (12) et comprenant un premier élément de fixation (26) et un deuxième élément de fixation (28), le premier élément de fixation (26) étant prévu pour coupler le dispositif de maintien (14) au deuxième élément de fixation (28) et le deuxième élément de fixation (28) étant prévu pour coupler le premier élément de fixation (26) à l'objet à protéger (12), dans lequel un moyen de maintien (30) est prévu à l'aide duquel le premier élément de fixation (26) est maintenu au niveau du dispositif de maintien (14) tout en maintenant simultanément l'au moins une tige (16) au niveau du dispositif de maintien (14) ;
**caractérisé en ce qu'**un élément élastique (54) est prévu entre le moyen de maintien (30) et l'au moins une tige (16).

2. Dispositif repoussoir selon la revendication 1, **caractérisé en ce que** le moyen de maintien (30) se compose d'un corps de base (32) en forme de disque et d'une vis (34).

3. Dispositif repoussoir selon la revendication 1 ou 2, **caractérisé en ce que** le moyen de maintien (30) forme une partie du dispositif de fixation (24).

4. Dispositif repoussoir selon l'une quelconque des revendications 1 à 3, dans lequel la zone d'extrémité (18) de l'au moins une tige maintenue à l'aide du dispositif de maintien (14) comporte une déformation (48) et se situe entre le premier élément de fixation (26) et le dispositif de maintien (14), **caractérisé en ce que** le moyen de maintien (30) maintient la déformation (48) de l'au moins une tige (16) entre le premier élément de fixation (26) et le dispositif de maintien (14).

5. Dispositif repoussoir selon l'une quelconque des revendications 1 à 4, **caractérisé en ce qu'**une rainure (52) est prévue entre le moyen de maintien (30) et le dispositif de maintien (14).

6. Dispositif repoussoir selon l'une quelconque des revendications 1 à 5, dans lequel le dispositif de fixation (24) est prévu sous la forme d'un dispositif aimanté (62) permettant de placer de façon amovible le dispositif de maintien (14) au niveau d'un objet à protéger (12).

7. Dispositif repoussoir selon la revendication 6, dans lequel le dispositif aimanté (62) comprend un élément d'aimant (58) magnétisé et un élément d'adhérence (60) magnétique.

8. Dispositif repoussoir selon l'une quelconque des revendications 1 à 7, **caractérisé en ce qu'**un dispositif crampon (64) permettant de placer de façon amovible le dispositif de maintien (14) est prévu au niveau de l'objet à protéger (12).

9. Dispositif repoussoir selon la revendication 8, dans lequel le dispositif crampon (64) comporte deux éléments de crampon (66, 68) parmi lesquels un premier élément de crampon (66) est disposé fixement sur place au niveau du dispositif de maintien (14) et le deuxième élément de crampon (68) est agencé de façon au moins légèrement déformable, de façon à pouvoir être placé au niveau de l'objet à protéger (12).
